# EUROPÄISCHE PATENTANMELDUNG

(11) **EP 3 034 220 A1**
(43) Veröffentlichungstag der Anmeldung: **22.06.2016**
(21) Anmeldenummer: 15198129.7
(22) Anmeldetag: 04.12.2015
(51) Int. Cl.: B23F 21/02, B23F 5/02, B23F 5/16, B23F 17/00, F16H 49/00

(54) **VERFAHREN UND VORRICHTUNG ZUM SCHLEIFENDEN BEARBEITEN DER VERZAHNUNG EINES ZAHNRADES**

(30) Priorität: 16.12.2014 DE 102014118703; 16.12.2014 LU 92617
(71) Anmelder: Ovalo GmbH, 65555 Limburg (DE)
(72) Erfinder:
(74) Vertreter: Grabovac, Dalibor

(57) **Zusammenfassung**

Die Erfindung betrifft ein Verfahren und eine Vorrichtung zum schleifenden Bearbeiten der Verzahnung eines Zahnrades. In Bezug auf die Vorrichtung ist vorgesehen, dass das zu bearbeitende Zahnrad um eine erste Rotationsachse rotiert, während ein Schleifwerkzeug der Vorrichtung, das eine Gegenverzahnung und eine abrasive Oberfläche aufweist, synchron zur Rotation des Zahnrades um eine zweite Rotationsachse rotiert, wobei die erste Rotationsachse und die zweite Rotationsachse zueinander windschief sind, und wobei sich das Schleifwerkzeug parallel zur ersten Rotationsachse bewegt, während die Verzahnung des rotierenden Zahnrades und die Gegenverzahnung des rotierenden Schleifwerkzeuges der miteinander kämmen, so dass fortlaufend eine Relativbewegung der Zähne des Schleifwerkzeuges in den Zwischenräumen der Verzahnung des Werkstücks stattfindet, wobei die Geschwindigkeit der Relativbewegung größer ist, als beim Wälzschälen und/oder wobei die Relativgeschwindigkeit größer ist als 300 m/min, insbesondere größer als 400 m/min, ganz insbesondere größer als 500 m/min, ist.

## Beschreibung

Die Erfindung betrifft ein Verfahren zum schleifenden Bearbeiten der Verzahnung eines Zahnrades.

Die Erfindung betrifft außerdem eine Vorrichtung zum schleifenden Bearbeiten der Verzahnung eines Zahnrades.

Die Erfindung betrifft darüber hinaus ein Zahnrad, das mit einem solchen Verfahren oder einer solchen Vorrichtung hergestellt ist, sowie ein Spannungswellengetriebe mit einem solchen Zahnrad, und außerdem eine Verwendung einer Wälzschälmaschine.

Es gibt eine Vielzahl von Verfahren, um Zahnräder, insbesondere innen- oder außenverzahnte Zahnräder, herzustellen.

Beispielsweise ist das Herstellungsverfahren des Wälzschälens aus DE 243 514, DE 10 2008 037 514 A, DE 10 2005 049 528 A1 oder DE 10 2007 015 357 A1 bekannt. Das Wälzschälen ist eines von verschiedenen bekannten Verfahren zum Herstellen von Zahnrädern. Beim Wälzschälen wird die an einem Werkstück herzustellende Verzahnung mit einem Werkzeug-Zahnrad erzeugt, das Schneidkanten und eine zur herzustellenden Verzahnung komplementäre Verzahnung aufweist.

Hierzu werden das Werkstück und das Zahnrad an zueinander windschiefen Rotationsaxen positioniert und mit gegensinniger Drehrichtung synchron zueinander in Drehung versetzt. Die Schneidkanten des Werkzeug-Zahnrades führen hierbei aufgrund der windschiefen Stellung von Werkstück und Zahnrad in dem Werkstück eine Bewegung aus, die der Bewegung einer Baggerschaufel gleicht, wodurch die Verzahnung spanend hergestellt wird. Das rotierende Werkzeug-Zahnrad wird in einer bezogen auf das rotierende Werkstück axiale Vorschubrichtung relativ zu dem Werkstück bewegt, um die Verzahnung mittels der oben beschrieben Schneidbewegungen über die gewünschte Breite herzustellen.

Außer dem Prozess des Wälzschälens gibt es zur Herstellung von Zahnrädern beispielsweise auch den Prozess des Wälzstoßens oder den Prozess des Wälzfräsens, wobei letzterer zum Herstellen von innenverzahnten Zahnrädern regelmäßig nicht in Betracht kommt.

Unabhängig von der Art der Herstellung ist es zumeist erforderlich, dass hergestellte Zahnrad oder zumindest dessen Verzahnung nach dem primären Herstellprozess zu härten. Hierbei kann es vorkommen, dass sich das Zahnrad durch den Härtungsprozess etwas verzieht oder es durch Einlagerung von atomaren Fremdbestandteilen zu einer Maßänderung kommt (z.B. Aufkohlen). Insbesondere auch aus diesem Grund wird nach dem Härtungsprozess zumeist ein Schleifprozess durchgeführt, um die durch den Verzug bedingten Maßabweichungen zu korrigieren.

Insbesondere wird nach einem primären Herstellprozess jedoch ein Schleifprozess durchgeführt, um eine besonders gute Verzahnungsqualität (Oberflächenqualität) der Verzahnung zu erreichen, was sich im Betrieb des Zahnrades, beispielsweise in einem Getriebe, durch ein deutlich reduziertes Geräuschniveau auswirkt.

Zur schleifenden Bearbeitung von Zahnrädern sind eine Reihe von unterschiedlichen Verfahren bekannt.

Beispielsweise ist aus DE 10 2009 000 774 A1 bekannt, außenverzahnte Zahnräder mit einer Schrägverzahnung durch Wälzschleifen mit einem Werkzeug in Form einer im Wesentlichen evolventischen Schnecke fein zu bearbeiten.

Aus DE 37 04 607 A1 ist ein Verfahren zum Wälzschleifen von schräg verzahnten Zahnrädern in kontinuierlichen Diagonalwälzverfahren mit einem Werkzeug in Form einer wesentlichen evolventischen Schnecke bekannt, deren nutzbare Länge größer als die Länge des Arbeitsbereichs ist und deren Achsabstand zum Zahnrad während ihrer Vorschubbewegung in Richtung der Diagonalen aus Axial- und Tangentialrichtung zum Erzeugen einer breiten Balligkeit verändert wird.

Wälzschleifverfahren haben jedoch den ganz besonderen Nachteil, dass sie zum Schleifen von innenverzahnten Hohlrödern, insbesondere wenn diese einen kleinen Durchmesser aufweisen, nicht angewendet werden können.

Zum Schleifen der Verzahnung von innenverzahnten Zahnrädern kommt in der Praxis im Wesentlichen lediglich das Profilschleifverfahren in Betracht, bei dem mit einer einzelnen, speziell für die jeweilige Verzahnung profilierten rotierenden Schleifscheibe sukzessive Zahn für Zahn und Zahnzwischenraum für Zahnzwischenraum bearbeitet wird, was nachteiliger Weise sehr aufwendig und langwierig ist und sich insbesondere nachteilig auf die Verzahnungsqualität (Teilung) auswirken kann.

Beispielsweise offenbart DE 10 2010 021 749 A1 ein Verfahren zum Schleifen der Außen- und/oder Innenverzahnung eines dünnwandigen und im Wesentlichen hohlzylindrischen Werkstücks auf einer Verzahnungsschleifmaschine, wobei ein Schleifwerkzeug in radialer Richtung mittels eines Schlittens in eine vorgefertigte und zu bearbeitende Zahnlücke zugestellt und die Zahnlücke mit definierter radialer Zustellung geschliffen wird. Um eine Verzahnung mit präziser Geometrie herzustellen, wird in dieser Druckschrift vorgeschlagen, das Werkstück zunächst spannungsfrei auf einer Werkstückaufnahme aufzulegen und hinsichtlich einer zylindrischen Bezugsfläche eingehend zu vermessen, um die Messwerte für den folgenden Schleifprozess zu verwenden.

Ein weiterer Nachteil des Profilschleifens, insbesondere gegenüber dem bekannten Wälzschleifen, das jedoch nur für Außenverzahnungen geeignet ist, ist die Anfälligkeit auf Teilungsfehler, da, wie beschrieben, jede Zahnlücke einzeln bearbeitet werden muss. Darüber hinaus besteht der Nachteil, dass ein Profilschleifen bei sehr kleinen innenverzahnten Hohlrädern nicht möglich ist, weil der Innenraum des Hohlrades nicht ausreicht, um dort die Profilschleifscheibe, sowie der Mittel zum rotatorischen Antreiben der Profilschleifscheibe positionieren zu können.

Aus WO 2014/192672A1 ist ein Verfahren zum Schleifen eines Innenzahnrades, dessen Zähne eine bogenförmige Zahnform aufweisen, bekannt. Hierzu wird ein gezahnter Schleifstein verwendet, der synchron zu dem Innenzahnrad rotiert.

Es ist die Aufgabe der vorliegenden Erfindung, ein Verfahren zum schleifenden Bearbeiten der Verzahnung eines Zahnrades anzugeben, das besonders schnell und effizient, insbesondere auch zum Schleifen von Innenverzahnungen, ausführbar ist.

Die Aufgabe wird durch ein Verfahren gelöst, das durch folgende Schritte gekennzeichnet ist:
a. Versetzen des zu bearbeitenden Zahnrades in Rotation um eine erste Rotationsachse,
b. Versetzen eines Schleifwerkzeuges, das eine Gegenverzahnung und eine abrasive Oberfläche aufweist, in eine zur Rotation des Zahnrades synchrone Rotation um eine zweite Rotationsachse, wobei die erste Rotationsachse und die zweite Rotationsachse zueinander windschief sind,
c. Bewegen des Schleifwerkzeuges parallel zur ersten Rotationsachse während die Verzahnung des rotierenden Zahnrades und die Gegenverzahnung des rotierenden Schleifwerkzeuges miteinander kämmen,
d. wobei fortlaufend eine Relativbewegung der Zähne des Schleifwerkzeuges in den Zwischenräumen der Verzahnung des Werkstücks stattfindet und wobei die Geschwindigkeit der Relativbewegung größer ist, als bei einem Wälzschälen und/oder wobei die Relativgeschwindigkeit größer ist als 300 m/min, insbesondere größer als 400 m/min, ganz insbesondere größer als 500 m/min, ist und/oder größer als bei einem vorausgegangenen Wälzschälprozess, mittels dem die Verzahnung des Zahnrades hergestellt wurde.

Es ist eine weitere Aufgabe der vorliegenden Erfindung, eine Vorrichtung zum schleifenden Bearbeiten einer Verzahnung anzugeben, die ein besonders schnelles und effizientes Schleifen von Verzahnungen, insbesondere auch von Innenverzahnungen, ermöglicht.

Diese Aufgabe wird durch eine Vorrichtung gelöst, die dadurch gekennzeichnet ist, dass das zu bearbeitende Zahnrad um eine erste Rotationsachse rotiert, während ein Schleifwerkzeug der Vorrichtung, das eine Gegenverzahnung und eine abrasive Oberfläche aufweist, synchron zur Rotation des Zahnrades um eine zweite Rotationsachse rotiert, wobei die erste Rotationsachse und die zweite Rotationsachse zueinander windschief sind, und wobei sich das Schleifwerkzeug parallel zur ersten Rotationsachse bewegt, während die Verzahnung des rotierenden Zahnrades und die Gegenverzahnung des rotierenden Schleifwerkzeuges miteinander kämmen, so dass fortlaufend eine Relativbewegung der Zähne des Schleifwerkzeuges in den Zwischenräumen der Verzahnung des Werkstücks stattfindet, wobei die Geschwindigkeit der Relativbewegung größer ist, als beim Wälzschälen und/oder wobei die Relativgeschwindigkeit größer ist als 300 m/min, insbesondere größer als 400 m/min, ganz insbesondere größer als 500 m/min, ist.

Die Erfindung stellt in vorteilhafter Weise eine neuartige Möglichkeit zum Schleifen von Verzahnungen bereit. In vorteilhafter Weise bietet das erfindungsgemäße Verfahren die Möglichkeit, eine Verzahnung in vergleichsweise sehr kurzer Bearbeitungszeit mit sehr hoher Qualität zu schleifen.

In ganz besonders vorteilhafter Weise können das erfindungsgemäße Verfahren und die erfindungsgemäße Vorrichtung auch zum Schleifen von Innenverzahnungen verwendet werden, wobei auch hier eine Bearbeitung bei vergleichsweise sehr kurzen Bearbeitungszeiten und eine besonders hohen Güte ermöglicht ist. Insbesondere kann vorteilhaft vorgesehen sein, dass eine Innenverzahnung wälzend geschliffen wird.

Insbesondere bietet die Erfindung den Vorteil, dass auch die Innenverzahnung von besonders kleinen Zahnrädern geschliffen werden kann.

In erfindungsgemäßer Weise wurde erkannt, dass beim Prozess des Wälzschälens fortlaufend und in schneller Folge eine schaufelartige Relativbewegung der stirnseitig mit Schneiden versehenen Zähne des Werkzeug-Zahnrades in den Zwischenräumen der herzustellenden Verzahnung des Werkstücks stattfindet, die erfindungsgemäß statt für einen zerspanenden Prozess für einen Schleifprozess genutzt werden kann.

Wie weiter unten noch im Detail erläutert ist, ist es hierbei von besonderem Vorteil, einige besondere Parameter, wie insbesondere der Achskreuzwinkel, die Vorschubgeschwindigkeit und/oder die Rotationsgeschwindigkeiten, der miteinander in Eingriff stehenden und aufeinander abwälzenden Zahnräder (zu bearbeitendes Zahnrad und verzahntes Schleifwerkzeug), derart zu optimieren, dass die Geschwindigkeit der genannten, schaufelartigen Relativbewegung besonders groß wird. Grundsätzliche Bedingung ist eine derartige Optimierung für das erfindungsgemäße Verfahren jedoch nicht. Es hat sich gezeigt, dass ein effizientes Schleifen mit besonders gutem Ergebnis erzielbar ist, wenn die Geschwindigkeit der Relativbewegung größer sein, als bei Wälzschälprozessen üblich und/oder größer als 300 m/min, insbesondere größer als 400 m/min, ganz insbesondere größer als 500 m/min, ist und/oder größer als bei einem vorausgegangenen Wälzschälprozess mittels dem die Verzahnung des Zahnrades hergestellt wurde.

Damit bei dem Schleifprozess die Verzahnung des zu bearbeitenden Zahnrades und die Gegenverzahnung des Schleifwerkzeugs derart aufeinander abwälzen können, dass keine Störkräfte und insbesondere keine störenden Tangentialkräfte auftreten, ist vorzugsweise vorgesehen, dass die Verzahnung und die Gegenverzahnung dasselbe Modul aufweisen. Alternativ oder zusätzlich kann auch vorgesehen sein, dass die Gegenverzahnung eine größere Zahnhöhe aufweist, als die Verzahnung. Es jedoch nicht erforderlich, dass die Verzahnung und die Gegenverzahnung denselben Teilkreisdurchmesser aufweisen. Vielmehr ist zum Schleifen einer Innenverzahnung explizit erforderlich, dass das Schleifwerkzeug deutlich kleiner ausgebildet ist, als das zu bearbeitende Zahnrad, damit das Schleifwerkzeug im Inneren des zu bearbeitenden Zahnrades positioniert werden kann.

Wie bereits erläutert, kommt die erfindungsgemäß zum Schleifen genutzte Relativbewegung zwischen der Verzahnung und der Gegenverzahnung unter Anderem dadurch zu Stande, dass das Zahnrad und das Schleifwerkzeug an zueinander windschiefen Achsen positioniert sind. Insoweit ist es erforderlich, dass die erste Rotationsachse und die zweite Rotationsachse zueinander einen von 0° verschiedenen Achskreuzwinkel aufweisen. Hierzu sei zur Klarstellung folgendes erläutert: Es gibt genau zwei zueinander parallele Ebenen, wobei die erste Rotationsachse in einer ersten der beiden Ebene und die zweite Rotationsachse in einer zweiten der beiden Ebenen angeordnet ist. Projiziert man nun die Rotationsachsen senkrecht zu den Ebenen aufeinander, so stellt der Winkel zwischen den Projektionen der Rotationsachsen den Achskreuzwinkel dar.

Zur Klarstellung sei darauf hingewiesen, dass die Rotationsachsen dann zueinander windschief sind, wenn sie sich weder schneiden noch parallel zueinander sind.

Wie bereits erwähnt, ist die für den Schleifprozess entscheidende Relativgeschwindigkeit zwischen der Verzahnung und der Gegenverzahnung umso größer, je größer der Achskreuzwinkel ist. Insoweit kann vorteilhaft vorgesehen sein, dass die erste Rotationsachse und die zweite Rotationsachse zueinander einen Achskreuzwinkel aufweisen, der größer als 20 Grad, insbesondere größer als 30 Grad, insbesondere größer als 40 Grad ist und/oder im Bereich von 20 bis 40 Grad oder ganz insbesondere im Bereich von 30 bis 40 Grad liegt. Diese Gradangaben bieten sich insbesondere beim Schleifen einer Innenverzahnung an, bei der zusätzlich das Problem besteht, dass der Achskreuzwinkel nicht so groß gewählt werden darf, dass die das Schleifwerkzeug rotierend antreibende Welle mit dem Zahnrad kollidiert.

Eine weitere Möglichkeit, die Geschwindigkeit der für den Schleifprozess relevanten Relativbewegung von Verzahnung und Gegenverzahnung zu erhöhen besteht darin, die Rotationsgeschwindigkeit des Zahnrades - und damit natürlich auch die Rotationsgeschwindigkeit des synchron rotierenden Schleifwerkzeugs - zu erhöhen. Hierbei kann insbesondere vorteilhaft vorgesehen sein, dass das Zahnrad und/oder das Schleifwerkzeug mit einer Rotationsgeschwindigkeit von mehr als 5000, insbesondere von mehr als 6000 Umdrehungen pro Minute rotieren. Es hat sich gezeigt, dass höhere Rotationsgeschwindigkeiten, die zwar für den Schleifprozess vorteilhaft wären, nur aufwendig erzielbar sind, weil die Gefahr besteht, dass die Synchronisierung von Zahnrad und Schleifwerkzeug, die vorzugsweise separat voneinander angetrieben sind, versagt. Letztlich ist dies jedoch ein Regelungsproblem und keine grundsätzliche Beschränkung.

Eine weitere, alternative oder zusätzliche, Möglichkeit, eine hohe Geschwindigkeit der für den Schleifprozess relevanten Relativbewegung zu erreichen besteht darin, die Vorschubgeschwindigkeit der Relativbewegung des Schleifwerkzeugs parallel zur ersten Rotationsachse geeignet hoch zu wählen. Grundsätzlich gilt, dass die Relativgeschwindigkeit umso höher ist, je höher die Vorschubgeschwindigkeit ist. Allerdings darf die Vorschubgeschwindigkeit nicht so hoch werden, dass während des Schleifprozesses Störkräfte auftreten oder es gar zu einer Kollision und/oder einem Verklemmen des Zahnrades mit dem Schleifwerkzeug kommt. Insbesondere kann vorteilhaft vorgesehen sein, dass das Schleifwerkzeug mit einer Vorschubgeschwindigkeit von mehr als 8 Meter pro Minute und/oder mit einer Vorschubgeschwindigkeit im Bereich von 10 Meter pro Minute bis 20 Meter pro Minute parallel zur ersten Rotationsachse bewegt wird.

Der Schleifprozess kann in der Weise ausgeführt werden, dass das Schleifwerkzeug ausschließlich entlang einer einzigen Vorschubrichtung geführt wird, während es mit dem Zahnrad kämmend in Eingriff steht. Es ist alternativ jedoch auch möglich, dass das Schleifwerkzeug zeitlich aufeinander folgend in zueinander entgegengesetzten Vorschubrichtungen parallel zur ersten Rotationsachse bewegt wird. Hierbei wird vorteilhaft ausgenutzt, dass ein Schleifen - anders als beim Zerspanen - unabhängig von der Bewegungsrichtung möglich ist.

Die Erfindung ermöglicht es, sowohl Geradverzahnungen, als auch Schrägverzahnungen zu schleifen. Insbesondere hierbei kann vorgesehen sein, dass die Verzahnung des Zahnrades eine Geradverzahnung ist und die Gegenverzahnung eine Schrägverzahnung ist, wobei insbesondere vorgesehen sein kann, dass die Zähne der Schrägverzahnung wenigstens um den Achskreuzwinkel relativ, insbesondere genau um den Achskreuzwinkel, zur Axialrichtung geneigt sind. Umgekehrt kann vorteilhaft auch vorgesehen sein, dass die zu schleifende Verzahnung eine Schrägverzahnung ist, während die Gegenverzahnung eine Geradverzahnung ist. Auch hier ist es von Vorteil, wenn die Zähne der Geradverzahnung wenigstens um den Achskreuzwinkel, insbesondere genau um den Achskreuzwinkel, geneigt sind.

Das Schleifwerkzeug kann vorteilhaft insbesondere als Stirnrad ausgebildet sein. Insbesondere kann vorteilhaft vorgesehen sein, dass die Verzahnung des Schleifwerkzeugs besondere Freimachungen (insb. Kopf- und Flankenfreiwinkel) aufweist, insbesondere um Flanken- und Kopfkollisionen zu vermeiden, die sogar zum Bruch des Schleifwerkzeuges führen können.

Bei einer besonderen Ausführung ist das Schleifwerkzeug als Stirnrad ausgebildet, wobei der Zahnkopfdurchmesser über die Zahnbreite abnimmt. Alternativ oder zusätzlich kann auch vorgesehen sein, dass das Schleifwerkzeug als Stirnrad ausgebildet ist, wobei der Zahnfußdurchmesser über die Zahnbreite abnimmt. Insbesondere ist es auf diese Weise ermöglicht, einen Freiwinkel zu realisieren, was alternativ auch durch Einstellung der Drehachsen relativ zueinander erreicht werden kann.

Die abrasive Oberfläche des Schleifwerkzeugs kann insbesondere dadurch erreicht sein, dass das Schleifwerkzeug oder wenigstens ein Teil der Oberfläche des Schleifwerkzeugs aus einem Schleifmaterial gefertigt ist. Insbesondere kann vorteilhaft vorgesehen sein, dass das Schleifwerkzeug oder wenigstens ein Teil der Oberfläche des Schleifwerkzeugs aus Korund und/oder aus Sandstein und/oder aus einem CBN-Material (kubisch kristallines Bornitrid) gefertigt ist. Da das Schleifwerkzeug nicht die Aufgabe hat, das Zahnrad über eine bestimmte Schneide spanend zu bearbeiten, braucht das Schleifwerkzeug auch keine Schneide aufzuweisen. Ausgeschlossen ist dies jedoch nicht.

Ein Zahnrad kann vorteilhaft in der Weise hergestellt werden, dass zunächst in einem Wälzschälprozess eine Verzahnung hergestellt wird, die anschließend oder nach einem zwischengeschalteten Härteprozess gemäß der vorliegenden Erfindung geschliffen wird. Insbesondere kann ein Zahnrad vorteilhaft in der Weise hergestellt werden, dass zunächst in einem Wälzschälprozess eine Verzahnung hergestellt wird, die danach, insbesondere unmittelbar anschließend oder nach einem zwischengeschalteten Härteprozess, gemäß dem erfindungsgemäßen Verfahren geschliffen wird, wobei die Geschwindigkeit der Relativbewegung beim Schleifen größer ist, als die Relativbewegung der mit Schneiden versehenen Zähne eines Werkzeug-Zahnrades in den Zwischenräumen des herzustellenden Zahnrades beim vorausgegangenen Wälzschälprozess. Besonders gute Ergebnisse lassen sich erzielen, wenn die Geschwindigkeit der Relativbewegung beim Schleifen um mehr als das 2-fache, insbesondere um mehr als das 3-fache, größer ist, als beim vorausgegangenen Wälzschälprozess.

Die Erfindung hat den ganz besonderen Vorteil, dass zur Ausführung des Schleifprozesses eine an sich bekannte Wälzschälmaschine verwendet werden kann, wobei an Stelle des Wälzschälwerkzeuges ein Schleifwerkzeug, das eine Gegenverzahnung zur Verzahnung des zu schleifenden Zahnrades und eine abrasive Oberfläche aufweist, verwendet wird, wobei das Schleifwerkzeug beim Schleifprozess wie ein Wälzschälwerkzeug beim Wälzschälen, jedoch vorzugsweise mit anderen Einstellungen hinsichtlich Achskreuzwinkel und/oder Vorschubgeschwindigkeit und/oder Rotationsgeschwindigkeit, in die zu schleifende Verzahnung eingreift und mit dieser während der synchronen Rotation kämmt.

Unter einer Wälzschälmaschine wird jegliche Maschine, insbesondere auch eine Mehrachs-Bearbeitungsmaschine, verstanden, die geeignet und/oder dazu bestimmt ist, einen Wälzschälprozess auszuführen. Auch bei einer solchen Maschine kann an Stelle eines Wälzschälwerkzeuges ein Schleifwerkzeug, das eine Gegenverzahnung zur Verzahnung des zu schleifenden Zahnrades und eine abrasive Oberfläche aufweist, in der oben beschriebenen Weise eingesetzt werden.

Insbesondere kann vorteilhaft vorgesehen sein, dass für einen Wälzschälprozess und einen nachfolgende Schleifvorgang am demselben Zahnrad dieselbe Wälzschälmaschine, jedoch mit unterschiedlichen Werkzeugen, verwendet wird. Dies hat u.a. den besonderen Vorteil, dass eine besondere Präzision erzielbar ist, weil das Werkstück nicht umgespannt werden muss.

Von besonderem Vorteil ist ein Zahnrad, das mit einem erfindungsgemäßen Verfahren und/oder mit einer erfindungsgemäßen Vorrichtung bearbeitet/oder hergestellt wurde. Ein solches Zahnrad hat den ganz besonderen Vorteil einer besonders guten Oberflächenbeschaffenheit seiner Verzahnung. Dies insbesondere auch dann, wenn es sich um eine Innenverzahnung handelt.

Im Betrieb wirkt sich die besonders glatte und maßgenau herstellbare Oberfläche insbesondere hinsichtlich einer geringeren Geräuschentwicklung und eines verbesserten Verschleißverhaltens aus. Insoweit hat ein Spannungswellengetriebe, das ein erfindungsgemäß geschliffenes Zahnrad, beispielsweise als Circular Spline oder als Dynamic Spline, beinhaltet, besonders gute Eigenschaften hinsichtlich Geräuschentwicklung und Standzeit.

Von besonderem Vorteil ist ein Spannungswellengetriebe mit einem Innenverzahnten Zahnrad, das mit dem erfindungsgemäßen Verfahren und/oder mit der erfindungsgemäßen Vorrichtung hergestellt oder bearbeitet wurde, wobei das Zahnrad mit einem radialflexiblen außenverzahnten Zahnrad, das eine geringere Zähnezahl als das innenverzahnte Zahnrad aufweist kämmt und wobei ein Teil der Zähne des innenverzahnten Zahnrades mit einem Teil der Zähne des außenverzahnten Zahnrades durch Biegen des außenverzahnten Zahnrades in Kämmeingriff ist. Vorteilhaft kann auch das außenverzahnten Zahnrad mit dem erfindungsgemäßen Verfahren und/oder mit der erfindungsgemäßen Vorrichtung hergestellt oder bearbeitet sein.

In der Zeichnung ist der Erfindungsgegenstand beispielhaft und schematisch dargestellt und wird anhand der Figur nachfolgend beschrieben, wobei gleiche oder gleich wirkende Elemente zumeist mit denselben Bezugszeichen versehen sind. Dabei zeigt:

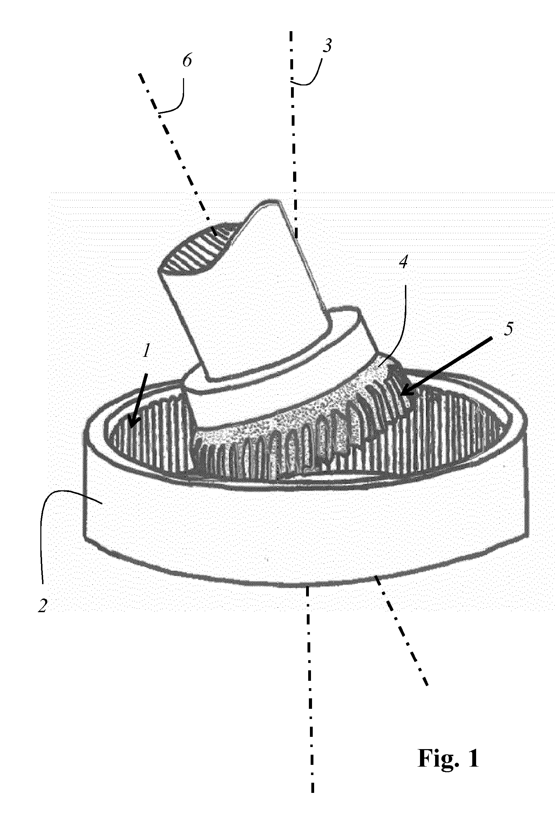

Fig. 1 illustriert ein Ausführungsbeispiel in Bezug auf das erfindungsgemäße Verfahren zum schleifenden Bearbeiten der Verzahnung 1 eines Zahnrades 2. Das zu bearbeitende Zahnrad 2 rotiert um eine erste Rotationsachse 3, während ein Schleifwerkzeug 4 der Vorrichtung, das eine Gegenverzahnung 5 und eine abrasive Oberfläche aufweist, synchron zur Rotation des Zahnrades 2 um eine zweite Rotationsachse 6 rotiert, wobei die erste Rotationsachse 3 und die zweite Rotationsachse 6 zueinander windschief sind, und wobei sich das Schleifwerkzeug 4 parallel zur ersten Rotationsachse 3 bewegt, während die Verzahnung 1 des rotierenden Zahnrades 2 und die Gegenverzahnung 5 des rotierenden Schleifwerkzeuges 4 der miteinander kämmen.

### Bezugszeichenliste:

- 1: Verzahnung
- 2: Zahnrad
- 3: erste Rotationsachse
- 4: Schleifwerkzeug
- 5: Gegenverzahnung
- 6: zweite Rotationsachse

## Patentansprüche

1. Verfahren zum schleifenden Bearbeiten der Verzahnung eines Zahnrades, **gekennzeichnet durch** folgende Schritte:
a. Versetzen des zu bearbeitenden Zahnrades in Rotation um eine erste Rotationsachse,
b. Versetzen eines Schleifwerkzeuges, das eine Gegenverzahnung und eine abrasive Oberfläche aufweist, in eine zur Rotation des Zahnrades synchrone Rotation um eine zweite Rotationsachse, wobei die erste Rotationsachse und die zweite Rotationsachse zueinander windschief sind,
c. Bewegen des Schleifwerkzeuges parallel zur ersten Rotationsachse während die Verzahnung des rotierenden Zahnrades und die Gegenverzahnung des rotierenden Schleifwerkzeuges der miteinander kämmen,
d. wobei fortlaufend eine Relativbewegung der Zähne des Schleifwerkzeuges in den Zwischenräumen der Verzahnung des Werkstücks derart stattfindet, dass die Geschwindigkeit der Relativbewegung größer ist, als beim Wälzschälen und/oder die Relativgeschwindigkeit größer ist als 300 m/min, insbesondere größer als 400 m/min, ganz insbesondere größer als 500 m/min, ist und/oder größer als bei einem vorausgegangenen Wälzschälprozess, mittels dem die Verzahnung des Zahnrades hergestellt wurde.

2. Verfahren nach Anspruch 1, **dadurch gekennzeichnet, dass**
a. das Zahnrad als Stirnrad ausgebildet ist und/oder dass
b. die Verzahnung eine Innenverzahnung oder eine Außenverzahnung ist, und/oder dass
c. die Verzahnung und die Gegenverzahnung dasselbe Modul aufweisen und/oder dass
d. die Gegenverzahnung eine größere Zahnhöhe aufweist, als die Verzahnung.

3. Verfahren nach Anspruch 1 oder 2, **dadurch gekennzeichnet, dass**
a. die erste Rotationsachse und die zweite Rotationsachse zueinander einen von Null Grad verschiedenen Achskreuzwinkel aufweisen, und/oder dass
b. die erste Rotationsachse und die zweite Rotationsachse zueinander einen Achskreuzwinkel aufweisen, der größer als 20 Grad, insbesondere größer als 30 Grad, insbesondere größer als 40 Grad, ist und/oder im Bereich von 20 Grad bis 40 Grad, insbesondere im Bereich von 30 Grad bis 40 Grad, liegt, und/oder dass
c. das Zahnrad mit einer Rotationsgeschwindigkeit von mehr als 5000, insbesondere mehr als 6000, Umdrehungen pro Minute rotiert und/oder dass
d. das Schleifwerkzeug mit einer Rotationsgeschwindigkeit von mehr als 5000, insbesondere mehr als 6000, Umdrehungen pro Minute rotiert.

4. Verfahren nach einem der Ansprüche 1 bis 3, **dadurch gekennzeichnet, dass**
a. die Verzahnung eine Geradverzahnung ist und die Gegenverzahnung eine Schrägverzahnung ist oder dass
b. die Verzahnung eine Geradverzahnung ist und die Gegenverzahnung eine Schrägverzahnung ist, bei der die Zähne wenigstens um den Achskreuzwinkel, insbesondere genau um den Achskreuzwinkel, geneigt sind, oder dass
c. die Gegenverzahnung eine Geradverzahnung ist und die Verzahnung eine Schrägverzahnung ist oder dass
d. die Gegenverzahnung eine Geradverzahnung ist und die Verzahnung eine Schrägverzahnung ist, bei der die Zähne wenigstens um den Achskreuzwinkel, insbesondere genau um den Achskreuzwinkel, geneigt sind.

5. Verfahren nach einem der Ansprüche 1 bis 4, **dadurch gekennzeichnet, dass**
a. das Schleifwerkzeug als Stirnrad ausgebildet ist und/oder dass
b. das Schleifwerkzeug als Stirnrad ausgebildet ist, wobei der Zahnkopfdurchmesser über die Zahnbreite abnimmt und/oder dass
c. das Schleifwerkzeug als Stirnrad ausgebildet ist, wobei der Zahnfußdurchmesser über die Zahnbreite abnimmt, und/oder dass
d. das Schleifwerkzeug oder wenigstens die Oberfläche des Schleifwerkzeugs aus einem Schleifmaterial gefertigt ist und/oder dass
e. das Schleifwerkzeug oder wenigstens die Oberfläche des Schleifwerkzeugs aus Korund gefertigt ist, und/oder dass
f. das Schleifwerkzeug oder wenigstens die Oberfläche des Schleifwerkzeugs aus Sandstein gefertigt ist, und/oder dass
g. das Schleifwerkzeug oder wenigstens die Oberfläche des Schleifwerkzeugs aus einem CBN-Material (kubisch kristallines Bornitrid) gefertigt ist, und/oder dass
h. das Schleifwerkzeug keine Schneide, insbesondere keine Schneide, die zum Bearbeiten der Verzahnung ausgebildet und angeordnet ist, aufweist, und/oder dass
i. das Schleifwerkzeug zeitlich aufeinanderfolgend in zueinander entgegengesetzten Richtungen parallel zur ersten Rotationsachse bewegt wird, und/oder dass
j. das Schleifwerkzeug mit einer Vorschubgeschwindigkeit von mehr als 8 m/min und/oder mit einer Vorschubgeschwindigkeit im Bereich von 10 m/min bis 20 m/min parallel zur ersten Rotationsachse bewegt wird, und/oder dass
k. das Schleifwerkzeug mit einer Vorschubgeschwindigkeit von weniger als 30 m/min, insbesondere weniger als 25 m/s, parallel zur ersten Rotationsachse bewegt wird.

6. Verfahren zum Herstellen eines Zahnrades, wobei
a. zunächst in einem Wälzschälprozess eine Verzahnung hergestellt wird und die hergestellte Verzahnung mit einem Verfahren nach einem der Ansprüche 1 bis 5 geschliffen wird, und/oder wobei
b. zunächst in einem Wälzschälprozess eine Verzahnung hergestellt wird und die hergestellte Verzahnung mit einem Verfahren nach einem der Ansprüche 1 bis 5 geschliffen wird, wobei die Geschwindigkeit der Relativbewegung beim Schleifen größer ist, als die Relativbewegung der mit Schneiden versehenen Zähne eines Werkzeug-Zahnrades in den Zwischenräumen des herzustellenden Zahnrades beim vorausgegangenen Wälzschälprozess, und/oder wobei
c. zunächst in einem Wälzschälprozess eine Verzahnung hergestellt wird und die hergestellte Verzahnung mit einem Verfahren nach einem der Ansprüche 1 bis 5 geschliffen wird, wobei die Geschwindigkeit der Relativbewegung beim Schleifen wenigstens um das zweifache, insbesondere um das vierfache, größer ist, als die Relativbewegung der mit Schneiden versehenen Zähne eines Werkzeug-Zahnrades in den Zwischenräumen des herzustellenden Zahnrades beim vorausgegangenen Wälzschälprozess, und/oder wobei
d. das Zahnrad oder zumindest die Verzahnung des Zahnrades zeitlich vor dem Schleifprozess gehärtet wird.

7. Verwendung einer Wälzschälmaschine zum Schleifen der Verzahnung eines Zahnrades und/oder zur Ausführung eines Verfahrens nach einem der Ansprüche 1 bis 6, wobei anstelle des Wälzschälwerkzeuges ein Schleifwerkzeug, das eine Gegenverzahnung und eine abrasive Oberfläche aufweist, verwendet wird, das beim Schleifprozess wie ein Wälzschälwerkzeug beim Wälzschälen mit der zu schleifenden Verzahnung kämmt.

8. Vorrichtung zum schleifenden Bearbeiten der Verzahnung eines Zahnrades, **dadurch gekennzeichnet, dass** das zu bearbeitende Zahnrad um eine erste Rotationsachse rotiert, während ein Schleifwerkzeug der Vorrichtung, das eine Gegenverzahnung und eine abrasive Oberfläche aufweist, synchron zur Rotation des Zahnrades um eine zweite Rotationsachse rotiert, wobei die erste Rotationsachse und die zweite Rotationsachse zueinander windschief sind, und wobei sich das Schleifwerkzeug parallel zur ersten Rotationsachse bewegt, während die Verzahnung des rotierenden Zahnrades und die Gegenverzahnung des rotierenden Schleifwerkzeuges der miteinander kämmen, so dass fortlaufend eine Relativbewegung der Zähne des Schleifwerkzeuges in den Zwischenräumen der Verzahnung des Werkstücks stattfindet, wobei die Geschwindigkeit der Relativbewegung größer ist, als beim Wälzschälen und/oder wobei die Relativgeschwindigkeit größer ist als 300 m/min, insbesondere größer als 400 m/min, ganz insbesondere größer als 500 m/min, ist.

9. Vorrichtung nach Anspruch 8, **dadurch gekennzeichnet, dass**
a. die Vorrichtung dazu ausgebildet und bestimmt ist, ein als Stirnrad ausgebildetes Zahnrad zu bearbeiten und/oder dass
b. die Vorrichtung dazu ausgebildet und bestimmt ist, eine als Innenverzahnung ausgebildete Verzahnung oder eine als Außenverzahnung ausgebildete Verzahnung zu schleifen und/oder dass
c. die Verzahnung und die Gegenverzahnung dasselbe Modul aufweisen und/oder dass
d. die Gegenverzahnung eine größere Zahnhöhe aufweist, als die Verzahnung.

10. Vorrichtung nach Anspruch 8 oder 9, **dadurch gekennzeichnet, dass**
a. die erste Rotationsachse und die zweite Rotationsachse zueinander einen von Null Grad verschiedenen Achskreuzwinkel aufweisen, und/oder dass
b. die erste Rotationsachse und die zweite Rotationsachse zueinander einen Achskreuzwinkel aufweisen, der größer als 20 Grad, insbesondere größer als 30, insbesondere größer als 40 Grad, ist und/oder im Bereich von 20 Grad bis 40 Grad, insbesondere im Bereich von 30 Grad bis 40 Grad, liegt, und/oder dass
c. das Zahnrad mit einer Rotationsgeschwindigkeit von mehr als 5000, insbesondere mehr als 6000, Umdrehungen pro Minute rotiert und/oder dass
d. das Schleifwerkzeug mit einer Rotationsgeschwindigkeit von mehr als 5000, insbesondere mehr als 6000, Umdrehungen pro Minute rotiert.

11. Vorrichtung nach einem der Ansprüche 8 bis 10, **dadurch gekennzeichnet, dass**
a. Gegenverzahnung eine Schrägverzahnung ist, um eine als Geradverzahnung ausgebildete Verzahnung zu schleifen oder dass
b. die Gegenverzahnung eine Schrägverzahnung ist, bei der die Zähne wenigstens um den Achskreuzwinkel, insbesondere genau um den Achskreuzwinkel, geneigt sind, oder dass
c. die Gegenverzahnung eine Geradverzahnung ist, um eine als Schrägverzahnung ausgebildete Verzahnung zu schleifen oder dass
d. die Gegenverzahnung eine Geradverzahnung ist, um eine als Schrägverzahnung, bei der die Zähne wenigstens um den Achskreuzwinkel, insbesondere genau um den Achskreuzwinkel, geneigt sind, ausgebildete Verzahnung zu schleifen.

12. Vorrichtung nach einem der Ansprüche 8 bis 11, **dadurch gekennzeichnet, dass**
a. das Schleifwerkzeug als Stirnrad ausgebildet ist und/oder dass
b. das Schleifwerkzeug als Stirnrad ausgebildet ist, wobei die Zahnkopfdurchmesser über die Zahnbreite abnimmt und/oder dass
c. das Schleifwerkzeug als Stirnrad ausgebildet ist, wobei der Zahnfußdurchmesser über die Zahnbreite abnimmt, und/oder dass
d. das Schleifwerkzeug oder wenigstens die Oberfläche des Schleifwerkzeugs aus einem Schleifmaterial gefertigt ist und/oder dass
e. das Schleifwerkzeug oder wenigstens die Oberfläche des Schleifwerkzeugs aus Korund gefertigt ist, und/oder dass
f. das Schleifwerkzeug oder wenigstens die Oberfläche des Schleifwerkzeugs aus Sandstein gefertigt ist, und/oder dass
g. das Schleifwerkzeug oder wenigstens die Oberfläche des Schleifwerkzeugs aus einem CBN-Material (kubisch kristallines Bornitrid) gefertigt ist, und/oder dass
h. das Schleifwerkzeug keine Schneide, insbesondere keine Schneide, die zum Bearbeiten der Verzahnung ausgebildet und angeordnet ist, aufweist, und/oder dass
i. sich das Schleifwerkzeug zeitlich aufeinanderfolgend in zueinander entgegengesetzten Richtungen parallel zur ersten Rotationsachse bewegt, und/oder dass
j. sich das Schleifwerkzeug mit einer Vorschubgeschwindigkeit von mehr als 8 m/min und/oder mit einer Vorschubgeschwindigkeit im Bereich von 10 m/min bis 20 m/min parallel zur ersten Rotationsachse bewegt
k. das Schleifwerkzeug mit einer Vorschubgeschwindigkeit von weniger als 30 m/min, insbesondere weniger als 25 m/s, parallel zur ersten Rotationsachse bewegt wird.

13. Schleifwerkzeug zur Verwendung bei einem Verfahren nach einem der Ansprüche 1 bis 6 und/oder für eine Vorrichtung nach einem der Ansprüche 8 bis 12.

14. Zahnrad bearbeitet und/oder hergestellt mit einem Verfahren nach einem der Ansprüche 1 bis 6 und/oder mit einer Vorrichtung nach einem der Ansprüche 8 bis 12 und/oder mit einem Schleifwerkzeug nach Anspruch 13.

15. Spannungswellengetriebe mit einem innenverzahnten Zahnrad, das mit einem Verfahren nach einem der Ansprüche 1 bis 6 und/oder mit einer Vorrichtung nach einem der Ansprüche 8 bis 12 und/oder mit einem Schleifwerkzeug nach Anspruch 13 hergestellt oder bearbeitet wurde, und mit einem radialflexiblen außenverzahnten Zahnrad, das eine geringere Zähnezahl als das innenverzahnte Zahnrad aufweist, wobei ein Teil der Zähne des innenverzahnten Zahnrads mit einem Teil der Zähne des außenverzahnten Zahnrads durch Biegen des außenverzahnten Zahnrads in Kämmeingriff ist.
